# EUROPÄISCHE PATENTSCHRIFT

(11) **EP 0 464 334 B1**
(45) Veröffentlichungstag und Bekanntmachung des Hinweises auf die Patenterteilung: **22.02.1995**
(21) Anmeldenummer: 91106748.6
(22) Anmeldetag: 26.04.1991
(51) Int. Cl.: B64C 1/20, B64D 9/00

(54) **Riegelelement zum Arretieren von Frachtstücken im Frachtraum von Luftfahrzeugen**
Clamping element for holding freight within the cargo space of aircraft
Elément de verrouillage pour bloquer des colis dans une soute à fret d'avion

(30) Priorität: 05.07.1990 DE 4021499
(43) Veröffentlichungstag der Anmeldung: 08.01.1992
(73) Patentinhaber: Daimler-Benz Aerospace Airbus Gesellschaft mit beschränkter Haftung, 21129 Hamburg (DE)
(72) Erfinder: Eilenstein-Wiegmanns, Wilfried, W-2805 Stuhr 2 (DE); Sempert, Hartmut, W-2870 Delmenhorst (DE)
(74) Vertreter: Hansmann, Dierk, Dipl.-Ing.

(56) Entgegenhaltungen:
- DE-A- 3 222 202
- FR-A- 2 240 176
- US-A- 4 372 715
- US-A- 4 441 842

## Beschreibung

Die Erfindung bezieht sich auf ein Riegelelement zum Arretieren von Frachtstücken im Frachtraum von Luftfahrzeugen, mit einem in Aufnahmevorrichtungen des Frachtraumbodens mit einem Gehäuse einsetzbaren und beim Transport im Frachtraum durch die Frachtstücke überrollbaren Riegel, der schwenkbar gelagert ist und an dem exzentrisch zu einem Schwenklager des Riegels eine Zugfeder angreift, deren anderes Ende mit einer den Riegel schwenkenden Betätigungsklappe verbunden ist.

Riegelelemente dieser Art haben die Aufgabe, Frachtstücke, wie Paletten und/oder Container, in der jeweiligen Stauposition des Frachtraumes zu halten. Wie aus der DE-A-3 222 202 hervorgeht, können derartige Riegelelemente mit Schnellverschlüssen versehen sein, um je nach Größe der Frachtstücke an den verschiedensten Positionen innerhalb des Frachtraumes eingesetzt und arretiert werden zu können. Die bekannten Riegelelemente haben den Vorteil, beim Transport der Frachtstücke im Frachtraum in einer Richtung automatisch überrollt werden zu können, während sie in Gegenrichtung sperren und zum Überrollen ein Arretieren in der abgesenkten Lage erfordern. Unbefriedigend ist aber die Baulänge dieser Riegelelemente, so daß neben dem relativ aufwendigen Aufbau auch wertvoller Stauraum verloren geht.

Die DE-A-3 222 202 zeigt bereits ein Riegelelement, bei dem ein verschwenkbarer überrollbarer Riegel vorgesehen ist, an dem exzentrisch zu einem Schwenklager des Riegels eine Zugfeder angreift. Das andere Ende der Zugfeder ist mit einer den Riegel schwenkenden Betätigungsklappe verbunden, die ebenfalls verschwenkbar gelagert ist. Der Riegel ist über ein Betätigungsgestänge mit der Betätigungsklappe verbunden und wird bei einem Absenken der Betätigungsklappe in ein u-förmiges Profil der Betätigungsklappe hineingeschwenkt. Zur Realisierung der erforderlichen Hebelgeometrien ist eine relativ lange Bauform vorgesehen.

Der Erfindung liegt daher die Aufgabe zugrunde, ein Riegelelement zum Arretieren von Frachtstücken im Frachtraum von Luftfahrzeugen zu schaffen, das sich durch einen einfachen Aufbau und eine sehr kurze Baulänge auszeichnet.

Diese Aufgabe ist gemäß der Erfindung dadurch gelöst, daß der Riegel mit zwei seitlich hervorstehenden Nocken in Kulissen der Betätigungsklappe eingreift, daß die Kulissen jeweils eine spitze Winkelform aufweisen, die aus zwei ineinander übergeleiteten Nuten besteht, die jeweils mit einer ausgehend vom Überleitungsbereich in Richtung auf eine Grundfläche der Betätigungsklappe weisenden Orientierung versehen sind und daß die Grundfläche von einem Rand der Betätigungsklappe aufgespannt ist, der dem von den Frachtstücken beim Überrollen der Betätigungsklappe beaufschlagten Bereich abgewandt angeordnet ist und daß die Grundfläche einen dem Schwenklager zugewandten Bereich der Betätigungsklappe und einen dem Riegel zugewandten Bereich der Betätigungsklappe miteinander verbindet.

Das erfindungsgemäße Riegelelement zeichnet sich durch eine extrem kurze Baulänge aus, und daher geht bei einem Einsatz derartiger Riegel nur wenig Stauraum verloren. Dabei kann die Zugfeder am Riegel und an der Betätigungsklappe derart angelenkt sein, daß der Riegel in der niedergedrückten Position eine Übertotpunktlage einnimmt. Weiterhin kann der Riegel zu beiden Seiten je einen Anschlag aufweisen, mit den sich dieser in der hochgeklappten Stellung der Betätigungsklappe jeweils gegen einen Anschlag der Betätigungsklappe legt. Hierdurch wird ein Schwenken des Riegels ohne Verstellung der Betätigungsklappe verhindert.

Die Erfindung wird anhand der Zeichnung näher erläutert. Es zeigen:
Fig. 1 einen hochgeklappten Riegel,
Fig. 2 einen hochgeklappten entsperrten Riegel,
Fig. 3 einen Riegel in der Totpunktlage und
Fig. 4 einen Riegel in der Übertotpunktlage.

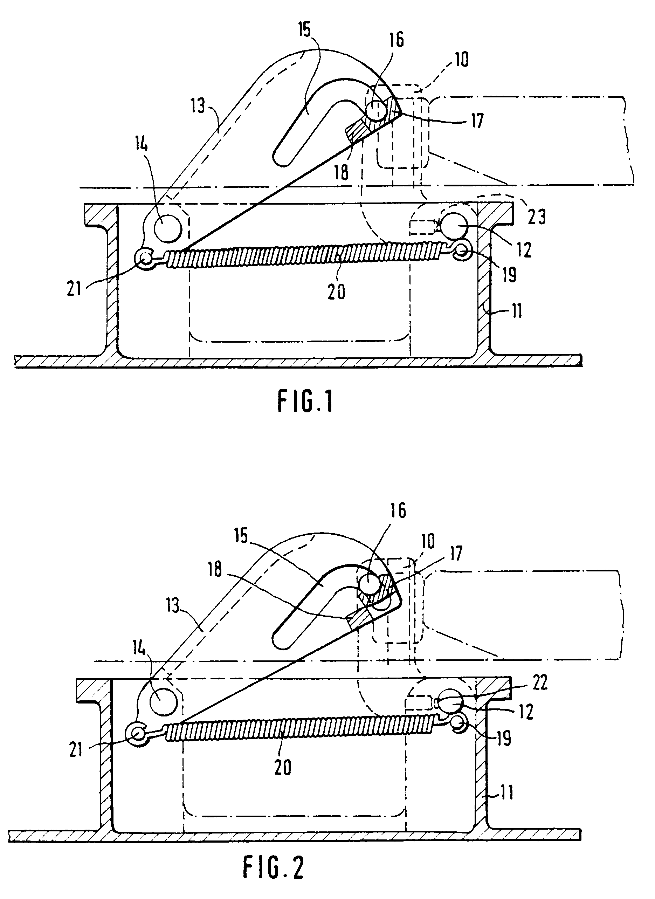

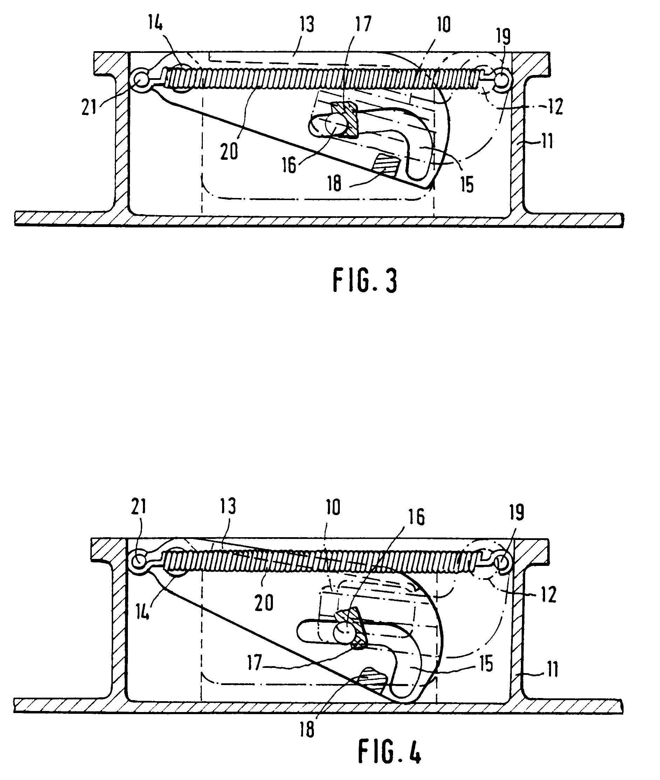

Wie die Darstellungen nach Fig. 1 bis Fig. 4 zeigen, ist ein Riegel 10 zwischen den Seitenwänden eines Gehäuses 11 schwenkbar gelagert. Der Riegel 10 besitzt hierzu eine Durchgangsbohrung, durch die ein gleichzeitig die Seitenwände des Gehäuses 11 durchdringender Lagerbolzen 12 gesteckt ist. Die Durchgangsbohrung ist in dem eine Winkelform aufweisenden Riegel 10 an einem Ende eines Schenkels vorgesehen, und daher kann der Riegel 10 aus der abgesenkten Lage in eine aufrecht stehende hochgeklappte Lage geschwenkt werden. Zum Verstellen des Riegels 10 dient eine Betätigungsklappe 13, die mit kurzem Abstand zum Riegel 10 mit einem Lagerbolzen 14 schwenkbar im Gehäuse 11 gelagert ist. Die Betätigungsklappe 13 hat einen U-förmigen Querschnitt, deren Schenkel nach unten weisen. In den Schenkeln der Betätigungsklappe 13 ist je eine Kulisse 15 vorgesehen, welche eine spitze Winkelform mit nach unten weisenden Schenkeln haben. In diese Kulissen 15 greifen je ein Nocken 16 ein, die seitlich aus dem Riegel 10 hervorstehen. Weiterhin sind neben den Nocken 16 an beiden Seiten des Riegels 10 je ein Anschlag 17 vorgesehen, die in der hochgeklappten Stellung (Fig. 1) sich jeweils gegen einen Anschlag 18 der Betätigungsklappe 13 legen. Hierdurch wird ein Schwenken des Riegels ohne Verstellung der Betätigungsklappe 13 verhindert. Am Riegel 10 ist ein seitlich angeordneter Stift 19 zum Anhängen einer Zugfeder 20 vorgesehen, deren anderes Ende an einem Stift 21 der Betätigungsklappe 13 jenseits des Lagerbolzens 14 angreift. Beide Stifte 19,21 sind derart positioniert, daß sich für die Betätigungsklappe 13 und den Riegel 10 eine Totpunktlage (Fig. 3) und bei weiterem Verschwenken des Riegels 10 und der Betätigungsklappe 13 eine Übertotpunktlage (Fig. 4) ergibt.

Das Riegelelement kann von Frachtstücken die aus der Richtung der Betätigungsklappe 13 kommen automatisch überrollt werden. Der Riegel 10 schwenkt dabei nach einem Überrollen in die hochgeklappte Position zurück, da er beim Überrollen höchstens die Totpunktlage gemäß Fig. 3 einnehmen kann. Soll das Riegelelement in Gegenrichtung überrollt werden, dann muß der Riegel 10 durch Niederdrücken der Betätigungsklappe 13 bis zur Übertotpunktlage abgesenkt werden. Danach kann der Riegel 10 durch manuelles Überwinden der Übertotpunktlage wieder hochgeklappt werden. Der Lagerbolzen 12 im Gehäuse (11) kann hierbei auch mit zwei Kerben (22) versehen sein, in die eine federbelastete Kugel (23) zur jeweiligen Lagesicherung der hochgeklappten Stellung bzw. der Übertotpunktlage eingreift.

## Patentansprüche

1. Riegelelement zum Arretieren von Frachtstücken im Frachtraum von Luftfahrzeugen, mit einem in Aufnahmevorrichtungen des Frachtraumbodens mit einem Gehäuse (11) einsetzbaren und beim Transport im Frachtraum durch die Frachtstücke überrollbaren Riegel (10), der schwenkbar gelagert ist und an dem exzentrisch zu einem Schwenklager des Riegels (10) eine Zugfeder (20) angreift, deren anderes Ende mit einer den Riegel (10) schwenkenden Betätigungsklappe (13) verbunden ist, dadurch gekennzeichnet, daß der Riegel (10) mit zwei seitlich hervorstehenden Nocken (16) in Kulissen (15) der Betätigungsklappe (13) eingreift, daß die Kulissen (15) jeweils eine spitze Winkelform aufweisen, die aus zwei ineinander übergeleiteten Nuten besteht, die jeweils mit einer ausgehend vom Überleitungsbereich in Richtung auf eine Grundfläche der Betätigungsklappe (13) weisenden Orientierung versehen sind und daß die Grundfläche von einem Rand der Betätigungsklappe (13) aufgespannt ist, der dem von den Frachtstücken beim Überrollen der Betätigungsklappe (13) beaufschlagten Bereich abgewandt angeordnet ist und daß die Grundfläche einen dem Schwenklager zugewandten Bereich der Betätigungsklappe (13) und einen dem Riegel (10) zugewandten Bereich der Betätigungsklappe (13) miteinander verbindet.

2. Riegelelement nach Anspruch 1, dadurch gekennzeichnet, daß die Zugfeder (20) am Riegel (10) und an der Betätigungsklappe (13) derart angelenkt ist, daß der Riegel (10) in der niedergedrückten Position eine Übertotpunktlage einnimmt.

3. Riegelement nach Anspruch 1 oder 2, dadurch gekennzeichnet, daß der Riegel (10) zu beiden Seiten je einen Anschlag (17) aufweist, welche sich in der hochgeklappten Stellung der Betätigungsklappe (13) jeweils gegen einen Anschlag der Betätigungsklappe (13) legen und ein Schwenken des Riegels (10) ohne Verstellung der Betätigungsklappe (13) verhindern.

4. Riegelelement nach einem der Ansprüche 1 bis 3, dadurch gekennzeichnet, daß der Lagerbolzen (12) zwei Kerben (22) aufweist, in die eine im Gehäuse (11) vorgesehene federbelastete Kugel (23) zur Lagesicherung der hochgeklappten Stellung beziehungswseise der Übertotpunktlage eingreift.

## Claims

1. Latch element for locking items of freight in the freight hold of aircraft, with a latch (10) which can be inset in receiving devices in the floor of the freight hold with a housing (11) and over which the items of freight can roll during transport in the freight hold, the said latch being pivotably mounted, wherein a tension spring engages on the latch eccentrically with respect to a pivot bearing of the latch (10), the other end of the tension spring being connected to an actuating flap (13) which pivots the latch (10), characterised in that the latch (10) engages with two laterally projecting cams (16) in slides (15) in the actuating flap (13), that the slides (15) each have an acute-angled shape consisting of two grooves which merge into one another and are provided with an orientation which starting from the merging region is directed towards a base surface of the actuating flap (13), and that the base surface extends from an edge of the actuating: flap (13) which is disposed so that it faces away from the region which is acted upon by the items of freight when they roll over the actuating flap (13), and that the base surface connects a region of the actuating flap (13) near the pivot bearing to a region of the actuating flap (13) near the latch (10).

2. Latch element according to Claim 1, characterised in that the tension spring (20) is articulated on the latch (10) and on the actuating flap (13) in such a way that in the depressed position the latch (10) takes up a position beyond the dead centre.

3. Latch element according to Claim 1 or 2, characterised in that the latch (10) has a stop (17) on either side which in the raised position of the actuating flap (13) in each case rests against a stop of the actuating flap (13) and prevents pivoting of the latch (10) without adjustment of the actuating flap (13).

4. Latch element according to one of Claims 1 to 3, characterised in that the bearing bolt (12) has two grooves (22) in which a spring-loaded ball (23) provided in the housing engages in order to secure the raised position or the position beyond the dead centre.

## Revendications

1. Elément de verrou pour bloquer des colis dans la soute à fret d'aéronefs, comprenant un verrou (10) qui se place avec un boîtier (11) dans des logements du fond de la soute à fret, et sur lesquels peuvent rouler les colis lors du transport dans la soute, ce verrou étant pivotant et un ressort de traction (20) agit de manière excentrée par rapport à un palier de pivotement du verrou (10), l'autre extrémité du ressort étant reliée à un volet d'actionnement (13) basculant le verrou (10), caractérisé en ce que le verrou (10) vient prendre par deux cames (16) latéralement en saillie dans les coulisses (15) de la patte de manoeuvre (13), les coulisses (15) ayant une forme coudée, pointue composée de deux rainures qui se rejoignent, et qui ont une orientation tournée vers une surface de base de la patte de manoeuvre (13) à partir de la zone de transition, et la surface de base est sous-tendue par un bord de la patte de manoeuvre (13) opposé à la zone sollicitée lors du passage des colis par-dessus la patte de manoeuvre (13), et en ce que la surface de base relie une zone de la patte (13) tournée vers le palier de basculement et une zone de la patte (13) tournée vers le verrou (10).

2. Elément de verrou selon la revendication 1, caractérisé en ce que le ressort de traction (20) est articulé sur le verrou (10) et sur la patte de manoeuvre (13) de façon que le verrou (10) passe dans une position enfoncée en dessous de la position au-delà du point mort.

3. Elément de verrou selon la revendication 1 ou 2, caractérisé en ce que le verrou (10) comporte des deux côtés une butée (17) qui, en position relevée de la patte de manoeuvre (13), s'appuient respectivement contre une butée de la patte de manoeuvre (13) et interdisent le basculement du verrou (10) sans déplacement de la patte de manoeuvre (13).

4. Elément de verrou selon l'une des revendications 1 à 3, caractérisé en ce que le goujon de palier (12) comporte deux encoches (22) dans lesquelles vient prendre une bille (23) chargée par ressort logée dans un boîtier (11) pour fixer la position relevée ou position au-delà de la position du point mort.
